# EUROPEAN PATENT APPLICATION

(11) **EP 1 500 335 A1**
(43) Date of publication of application: **26.01.2005**
(21) Application number: 03254636.8
(22) Date of filing: 23.07.2003
(51) Int. Cl.: A23L 1/236, A23L 1/09, A23L 2/60

(54) **Trehalose containing comestibles for sustained carboydrate energy release and reduced glycemic/insulinemic responses**

(71) Applicant: CERESTAR HOLDING BV, NL-4550 AA Sas Van Gent (NL)
(72) Inventor: The designation of the inventor has not yet been filed
(74) Representative: Knowles, James Atherton

(57) **Abstract**

The current invention relates to a composition comprising as sustained carbohydrate energy release source a) a mixture (A) of trehalose and a carbohydrate selected from the group consisting of fructose, fructose syrups, sucrose, invert sugar, polyol and mixtures thereof and wherein the ratio of trehalose to carbohydrate (H) is from 20:80 to 70:30, but excluding compositions, wherein a mixture of trehalose and carbohydrate selected from fructose and/or fructose syrups is present in a ratio of trehalose to carbohydrate of from 30:70 to 50:50, b) a mixture (B) of trehalose and at least one intense sweetener, or c) a mixture (C) of trehalose, at least one intense sweetener and carbohydrate selected from the group consisting of fructose, fructose syrups, sucrose, invert sugar, polyol and mixtures thereof. This composition is applied in solid, semi-solid and liquid comestibles.

## Description

### Technical Field

The present invention relates to a composition of trehalose and a carbohydrate selected from the group consisting of fructose, fructose syrups, sucrose, invert sugar, and mixtures thereof for sustained carbohydrate energy release in liquid, semi-solid and solid comestibles.

### Background

There are a number of liquid, semi-solid and solid products currently applied for providing energy to the body.

A lot of liquid compositions or diluted mixtures are on the market by the name of 'Activity drinks', 'Sports drinks', 'Energy drinks' or 'Nutrient drinks'. These drinks are reported to meet requirements with respect to the use and/or loss of carbohydrates, electrolytes, vitamins, electrolytes, amino acids, and other important nutrients which occurs during heavy exercise.

EP 0 882 408 relates to a method for improving the aftertaste of sucrose without lowering the sweetening power of sucrose, and which comprises incorporating trehalose into sucrose in an amount of 2 to 12% to the sucrose.

JP2001069941A2 (Abstract) relates to a composition which retains a sugar-like flavor by coexistence of fructose and trehalose in a ratio of 1: (0.4 to 1).

JP2000262216A2 (Abstract) relates to a sweetener containing coffee beverage comprising trehalose in an amount corresponding to 10 -30% of the sweetener.

JP9173017A2 (Abstract) relates to a beverage or food containing trehalose for improvement of physical strength.

There is a further need for having compositions suitable for sustained carbohydrate energy release.

The current invention provides such a composition and products comprising this composition.

### Summary of Invention

The current invention relates to a composition comprising as sustained carbohydrate energy release source a) a mixture (A) of trehalose and a carbohydrate (H) selected from the group consisting of fructose, fructose syrups, sucrose, invert sugar, polyol and mixtures thereof and wherein the ratio of trehalose to carbohydrate (H) is from 20:80 to 70:30, but excluding compositions, wherein a mixture of trehalose and carbohydrate (H) selected from fructose and/or fructose syrups is present in a ratio of trehalose to carbohydrate (H) of from 30:70 to 50:50, b) a mixture (B) of trehalose and at least one intense sweetener, or c) a mixture (C) of trehalose, at least one intense sweetener and carbohydrate (H) selected from the group consisting of fructose, fructose syrups, sucrose, invert sugar, polyol and mixtures thereof.

The current invention relates to a composition comprising as sustained carbohydrate energy release source a mixture (A) of trehalose and carbohydrate (H) selected from the group consisting of fructose, fructose syrups, sucrose, invert sugar, polyol and mixtures thereof and wherein the ratio of trehalose to carbohydrate (H) is from 33:67 to 70:30, and excluding compositions, wherein a mixture of trehalose and carbohydrate (H) selected from fructose and/or fructose syrups is present in a ratio of trehalose to carbohydrate (H) of from 33:67 to 50:50, or a mixture (C) containing from 20 to 70% by weight trehalose.

The current invention further relates to a solid, semi-solid or liquid comestible wherein at least 5% of aforementioned composition (based on dry matter of comestible) is present. Preferably said composition represents more than 10% of dry substance of the comestible.

Said comestible is selected from the group consisting of tablets, bars, confectionery, beverages, beverage concentrates, gels, drink powders, diabetic food, baby food, infant food, dietetic food, slimming food, food for special dietary needs and medical food.

Furthermore, the current invention relates to a beverage selected from the group consisting of hypotonic drinks, soft drinks, sports drinks, hypertonic drinks, energy drinks and isotonic drinks. The beverage further can comprise other carbohydrates, proteins, peptides, amino acids, antioxidants, fats, vitamins, trace elements, electrolytes, intense sweeteners, edible acids, flavors and/or mixtures thereof. These carbohydrates are selected from the group consisting of monosaccharides, disaccharides, gelling starches, starch hydrolysates, dextrins, polyols and mixtures thereof. The dry substance of said carbohydrates in the beverage is comprising at least 50% of a composition comprising as sustained carbohydrate energy release source a) a mixture (A) of trehalose and a carbohydrate (H) selected from the group consisting of fructose, fructose syrups, sucrose, invert sugar, polyol and mixtures thereof and wherein the ratio of trehalose to carbohydrate (H) is from 20:80 to 70:30, b) a mixture (B) of trehalose and at least one intense sweetener, or c) a mixture (C) of trehalose, at least one intense sweetener and carbohydrate (H) selected from the group consisting of fructose, fructose syrups, sucrose, invert sugar, polyol and mixtures thereof.

Furthermore, the dry substance of said carbohydrates in the beverage is comprising at least 50% of a composition comprising as sustained carbohydrate energy release source a mixture (A) of trehalose and carbohydrate (H) selected from the group consisting of fructose, fructose syrups, sucrose, invert sugar, polyol and mixtures thereof and wherein the ratio of trehalose to carbohydrate (H) is from 33:67 to 70:30, or a mixture (C) containing from 20 to 70% by weight trehalose.

The current invention further relates to the use of a mixture (A) of trehalose and a carbohydrate (H) selected from the group consisting of fructose, fructose syrups, sucrose, invert sugar, polyol and mixtures thereof, b) a mixture (B) of trehalose and at least one intense sweetener, or c) a mixture (C) of trehalose, at least one intense sweetener and carbohydrate (H) selected from the group consisting of fructose, fructose syrups, sucrose, invert sugar, polyol and mixtures thereof for sustained carbohydrate energy release in athletics food, dietetic food, slimming food, food for special dietary needs, diabetics food, baby food, infant food, food for elderly, and medical food.

The current invention further relates to the use of mixture (A) wherein the ratio of trehalose to carbohydrate (H) is from 20:80 to 70:30 or mixture (C) containing from 20 to 70% by weight of trehalose for special dietary needs, slimming food, diabetics food, baby food, infant food and food for elderly, and medical food.

Furthermore, the current invention relates to the use of a mixture (A) of trehalose and a carbohydrate (H) selected from the group consisting of fructose, fructose syrups, sucrose, invert sugar, polyol and mixtures thereof, or b) a mixture (B) of trehalose and at least one intense sweetener, or c) a mixture (C) of trehalose, at least one intense sweetener and carbohydrate (H) selected from the group consisting of fructose, fructose syrups, sucrose, invert sugar, polyol and mixtures thereof, for modified perception of satiety or hunger.

### Detailed Invention

The current invention relates to a composition comprising as sustained carbohydrate energy release source a) a mixture (A) of trehalose and a carbohydrate (H) selected from the group consisting of fructose, fructose syrups, sucrose, invert sugar, polyol and mixtures thereof and wherein the ratio of trehalose to carbohydrate (H) is from 20:80 to 70:30, but excluding compositions, wherein a mixture of trehalose and carbohydrate (H) selected from fructose and/or fructose syrups is present in a ratio of trehalose to carbohydrate of from 30:70 to 50:50, b) a mixture (B) of trehalose and at least one intense sweetener, or c) a mixture (C) of trehalose, at least one intense sweetener and carbohydrate (H) selected from the group consisting of fructose, fructose syrups, sucrose, invert sugar, polyol and mixtures thereof.

The current invention further relates to a composition comprising as sustained carbohydrate energy release source a mixture (A) of trehalose and carbohydrate (H) selected from the group consisting of fructose, fructose syrups, sucrose, invert sugar, polyol and mixtures thereof and wherein the ratio of trehalose to carbohydrate (H) is from 33:67 to 70:30, and excluding compositions, wherein a mixture of trehalose and carbohydrate (H) selected from fructose and/or fructose syrups is present in a ratio of trehalose to carbohydrate (H) of from 33:67 to 50:50, or a mixture (C) containing from 20 to 70% by weight trehalose.

Trehalose (α-D-glucopyranosyl-α-D-glucopyranoside) has been known as non-reducing saccharide composed of glucose units.

Fructose syrups cover all syrups containing on dry substance from 42 to 100% fructose. An example of a fructose syrup can be high fructose corn syrup which is containing from 42-55% fructose.

The intense sweeteners include, but are not limited to, saccharin, cyclamates, acetosulfam, aspartame and the like. The mixture is comprising at least one intense sweetener, and mixtures of intense sweeteners can be included as well.

The polyol is can be selected from tetritols, pentitols, hexitols, and higher polyols. The polyol is including but not limited to erythritol, xylitol, arabinitol, sorbitol, mannitol, iditol, galactitol, maltitol, isomaltitol, isomalt, lactitol, mixtures thereof and the like.

The composition is particular useful for providing carbohydrate energy over a long period, while the composition is digestible, and absorbable.

The current invention further relates to a solid, semi-solid or liquid comestible wherein based on dry matter of comestible at least 5% of aforementioned composition is present. Preferably said composition represents more than 10% of dry substance of the comestible.

Said comestible is selected from the group consisting of tablets, bars, confectionery, beverages, beverage concentrates, gels, drink powders, diabetics food, baby food, infant food, dietetic food, slimming food, food for special dietary needs, and medical food.

Tablets can be based solely upon the composition containing a) a mixture (A) of trehalose and a carbohydrate (H) selected from the group consisting of fructose, fructose syrups, sucrose, invert sugar, polyol and mixtures thereof and wherein the ratio of trehalose to carbohydrate (H) is from 20:80 to 70:30, but excluding compositions, wherein a mixture of trehalose and carbohydrate (H) selected from fructose and/or fructose syrups is present in a ratio of trehalose to carbohydrate (H) of from 30:70 to 50:50, or b) a mixture (B) of trehalose and at least one intense sweetener, or c) a mixture (C) of trehalose, at least one intense sweetener and carbohydrate (H) selected from the group consisting of fructose, fructose syrups, sucrose, invert sugar, polyol and mixtures thereof. In particular the tablets can be based solely on the composition comprising as sustained carbohydrate energy release source a mixture (A) of trehalose and carbohydrate (H) selected from the group consisting of fructose, fructose syrups, sucrose, invert sugar, polyol and mixtures thereof and wherein the ratio of trehalose to carbohydrate (H) is from 33:67 to 70:30, and excluding compositions, wherein a mixture of trehalose and carbohydrate (H) selected from fructose and/or fructose syrups is present in a ratio of trehalose to carbohydrate (H) of from 33:67 to 50:50, or a mixture (C) containing from 20 to 70% by weight trehalose. The diabetic food, baby food, infant food, dietetic food, slimming food, food for special dietary needs refer to any type of food suitable for diabetics, babies, infants and people needing a special dietetic formulation and any one who can benefit from the presence of a sustained carbohydrate energy release source, and those who can benefit from a modified perception of satiety or hunger.

Medical food refers to any liquid, semi-solid or liquid comestible which is given to people in medical need for having access to extra sustained carbohydrate energy source, e.g. people with heavy burns and/or scalds.

The beverage can be any drinkable solution including iced tea, and fruit juices, vegetable based juices, lemonades, cordials, nut based drinks, cocoa based drinks, dairy products such as milk, whey, yogurts and drinks based on them.

Beverage concentrate refers to a concentrate that is either in liquid form or in essentially dry mixture form. The liquid concentrate can be in the form of a relatively thick, syrupy liquid. The essentially dry mixture can be in the form of either a powder or a tablet. The beverage concentrate is usually formulated to provide a drinkable beverage composition or a final beverage when constituted or diluted with water, either carbonated or non-carbonated.

Drink powders are suitable for constituting with water, carbonated or non-carbonated, a final beverage for oral administration of sustained energy release source of current invention.

Furthermore, the current invention relates to a beverage selected from the group consisting of hypotonic drinks, soft drinks, sports drinks, hypertonic drinks, energy drinks and isotonic drinks.

A specific example of a hypotonic drink is a rehydration drink.

In general, the beverage can further be characterized in having an osmolality of from 50 to 800 mOs/L, preferably from 150 to 600 mOs/L, more preferably from 200 to 400 mOs/L.

An isotonic drink is typically characterized by an osmolality of from 270 - 330 mOs/L.

The beverage further can comprise other carbohydrates, proteins, peptides, amino acids, antioxidants, fats, vitamins, trace elements, electrolytes, intense sweeteners, edible acids, flavors and/or mixtures thereof.

The carbohydrates are selected from the group consisting of monosaccharides, disaccharides, gelling starches, starch hydrolysates, dextrins, polyols and mixtures thereof, whereby these carbohydrates are different from said carbohydrate and trehalose mentioned in the composition of current invention.

The monosaccharides include tetroses, pentoses, hexoses and ketohexoses.

Starch hydrolysates are produced by the controlled acid or enzymatic hydrolysis of starch and can be subdivided into two specific categories, maltodextrins and glucose syrups and are characterized by DE number (dextrose equivalent). In fact, DE number is a measurement of the percentage of reducing sugars present in the syrup and calculated as dextrose on a dry weight basis. Maltodextrins have a DE number up to 20 whereas glucose syrups have an DE number greater than 20.

Dextrins are prepared according to the dextrinisation method. Dextrinisation is a heat treatment of dry starch in presence or absence of acid.

Gelly starches may include emulsified starches such as starch n-octenyl succinate.

Preferably the dry matter content of the carbohydrates present in the beverage is comprising at least 50% of a composition containing a) a mixture (A) of trehalose and a carbohydrate (H) selected from the group consisting of fructose, fructose syrups, sucrose, invert sugar, polyol and mixtures thereof and wherein the ratio of trehalose to carbohydrate (H) is from 20:80 to 70:30, b) a mixture (B) of trehalose and at least one intense sweetener, or c) a mixture (C) of trehalose, at least one intense sweetener and carbohydrate (H) selected from the group consisting of fructose, fructose syrups, sucrose, invert sugar, polyol and mixtures thereof. Furthermore, the dry matter content of the carbohydrates present in the beverage is comprising at least 50% of a composition containing a mixture (A) of trehalose and carbohydrate (H) selected from the group consisting of fructose, fructose syrups, sucrose, invert sugar, polyol and mixtures thereof and wherein the ratio of trehalose to carbohydrate (H) is from 33:67 to 70:30, or a mixture (C) containing from 20 to 70% by weight trehalose. In fact, it is further possible having beverages wherein the dry matter content of the carbohydrates is based 100% upon the composition of the current invention, i.e composition containing a) a mixture (A) of trehalose and a carbohydrate (H) selected from the group consisting of fructose, fructose syrups, sucrose, invert sugar, polyol and mixtures thereof and wherein the ratio of trehalose to carbohydrate (H) is from 20:80 to 70:30, but excluding compositions, wherein a mixture of trehalose and carbohydrate (H) selected from fructose and/or fructose syrups is present in a ratio of trehalose to carbohydrate (H) of from 30:70 to 50:50, b) a mixture (B) of trehalose and at least one intense sweetener, or c) a mixture (C) of trehalose, at least one intense sweetener and carbohydrate (H) selected from the group consisting of fructose, fructose syrups, sucrose, invert sugar, polyol and mixtures thereof.

In these beverage the dry matter content of the carbohydrates can be based 100% upon the composition of the current invention, i.e composition containing a mixture (A) of trehalose and carbohydrate (H) selected from the group consisting of fructose, fructose syrups, sucrose, invert sugar, polyol and mixtures thereof and wherein the ratio of trehalose to carbohydrate (H) is from 33:67 to 70:30, and excluding compositions, wherein a mixture of trehalose and carbohydrate (H) selected from fructose and/or fructose syrups is present in a ratio of trehalose to carbohydrate (H) of from 33:67 to 50:50, or a mixture (C) containing from 20 to 70% by weight trehalose.

Among the major physiological electrolytes are sodium, potassium, chloride, calcium, and magnesium. Further trace elements can be included such as chromium, copper, selenium, iron, manganese, molybdenym, zinc and mixtures thereof.

Among the vitamins one can range vitamin A, vitamin C, vitamin E and/or vitamin B₁₂.

The edible acids can be selected from phosphoric acid, citric acid, malic acid, succinic acid, adipic acid, gluconic acid, tartaric acid, fumaric acid and mixtures thereof. Preferably the pH range of the beverage is from about 2 to about 6.5.

The flavors are selected from fruit flavors, botanical flavors and mixtures thereof. Preferred flavors are cola flavor, grape flavor, cherry flavor, apple flavor and citrus flavors such as orange flavor, lemon flavor, lime flavor, fruit punch and mixtures thereof. The amount of flavor depends upon the flavor or flavors selected, the flavor impression desired and the form of flavor used.

If desired, colouring agents can also be added. Any soluble colouring agent approved for food use can be utilized for the current invention.

When desired, preservatives such as potassium sorbate and sodium benzoate can be added.

Gums, emulsifiers and oils can also be added in the beverage for texture and opacity purposes. Typical ingredients include guar gum, xanthan gum, alginates, carboxymethylcellulose, mono-di- glycerides, lecithin, gelling starches, pectin, pulp, cotton seed oil and vegetable oil.

The beverage may be prepared by mixing together all of the ingredients. The mixture is then dissolved in water and agitated until all the ingredients are dissolved. Dissolution may occur at ambient temperature but it may be necessary for the solution to be heated to temperature between 50-100°C to get all the ingredients into solution. After the mixture having been adjusted to a desired pH, the beverage may be bottled, capped, and eventually pasteurized at about 75°C for about 20 minutes, or the beverage may be before bottling continuously pasteurized for a few minutes.

One way to prepare the concentrate of the beverage would be to start with less than the required volume of the liquid solvent that is used to prepare the drinkable beverage. Another way would be to partially dehydrate the finally prepared drinkable beverage to remove only a portion of the liquid solvent and any other volatile liquid present.

Carbon dioxide can be introduced either into the water to be mixed with the beverage concentrate or into the drinkable beverage to achieve carbonation. The carbonated beverage can then be stored in a container, such as a bottle or a can and then be sealed.

The current invention relates to the use of a mixture of trehalose and carbohydrate (H) selected from the group consisting of fructose, fructose syrups, sucrose, invert sugar, polyol and mixtures thereof, or a mixture of trehalose and intense sweetener and/or carbohydrate (H) selected from the group consisting of fructose, fructose syrups, sucrose, invert sugar, polyol and mixtures thereof.

The current invention further relates to the use of a) a mixture (A) of trehalose and a carbohydrate (H) selected from the group consisting of fructose, fructose syrups, sucrose, invert sugar, polyol and mixtures thereof, b) a mixture (B) of trehalose and at least one intense sweetener, or c) a mixture (C) of trehalose, at least one intense sweetener and carbohydrate (H) selected from the group consisting of fructose, fructose syrups, sucrose, invert sugar, polyol and mixtures thereof, for sustained carbohydrate energy release in athletics food, dietetic food, food for special dietary needs, diabetics food, baby food, infant food, food for elderly and medical food.

The current invention further relates to the use of mixture(A) wherein the ratio of trehalose to carbohydrate(H) is from 20:80 to 70:30 or mixture (C) containing from 20 to 70% by weight of trehalose.

Furthermore, the current invention relates to the use of a) a mixture (A) of trehalose and a carbohydrate (H) selected from the group consisting of fructose, fructose syrups, sucrose, invert sugar, polyol and mixtures thereof, b) a mixture (B) of trehalose and at least one intense sweetener, or c) a mixture (C) of trehalose, at least one intense sweetener and carbohydrate (H) selected from the group consisting of fructose, fructose syrups, sucrose, invert sugar, polyol and mixtures thereof, to modify perception of satiety or hunger.

The current invention has the following advantages:
- The composition of the current invention is a suitable source of sustained carbohydrate energy release.
- Said composition is digestible, and absorbable.
- The composition can be applied in solid, semi-solid and liquid comestibles.
- The comestible is suitable for athletics, diabetics, babies, infants, elderly people and those requiring a special diet in respect of sustained carbohydrate energy release.
- The comestible is suitable for people following a slimming diet due to the modified perception of satiety or hunger.

The current invention is illustrated by way of the following examples.

### Example 1

The basic syrup was prepared with the following ingredients:
210 g trehalose
385 g sucrose
5 ml sodium benzoate 10% (w/v)
2.6 ml phosphoric acid 85%
15 g cola flavor Wild (nr 35103000170000)
   carbonated water was added for obtaining 1 liter basic syrup.
42 ml of this basic syrup was placed in a bottle and further diluted with carbonated water to a final volume of 210 ml.

The taste was evaluated with a taste panel.

A good cola perception was found, comparable to a standard drink prepared with 534 g sucrose.

### Example 2

The basic syrup was prepared with:
319 g trehalose
288 g sucrose
5 ml sodium benzoate 10% (w/v)
2.6 ml phosphoric acid 85%
15 cola flavor Wild (nr 35103000170000)
   + carbonated water until 1 Liter
42 ml of this basic syrup was diluted with carbonated water until a final volume of 210 ml.

The taste was again evaluated by a taste panel and was considered as an acceptable formulation.

## Claims

1. Composition comprising as sustained carbohydrate energy release source:
a) a mixture(A) of trehalose and a carbohydrate (H) selected from the group consisting of fructose, fructose syrups, sucrose, invert sugar, polyol, and mixtures thereof and wherein the ratio of trehalose to carbohydrate (H) is from 20:80 to 70:30, and excluding compositions, wherein a mixture of trehalose and carbohydrate (H) selected from fructose and/or fructose syrups is present in a ratio of trehalose to carbohydrate (H) of from 30:70 to 50:50,
b) a mixture (B) of trehalose and at least one intense sweetener, or
c) a mixture (C) of trehalose, at least one intense sweetener and a carbohydrate (H) selected from the group consisting of fructose, fructose syrups, sucrose, invert sugar, polyol, and mixtures thereof.

2. A composition according to claim 1 **characterized in that** it is comprising a mixture (A) wherein the ratio of trehalose and carbohydrate (H) is from 33:67 to 70:30, and excluding compositions, wherein a mixture of trehalose and carbohydrate (H) selected from fructose and/or fructose syrups is present in a ratio of trehalose to carbohydrate (H) of from 33:67 to 50:50, or a mixture (C) containing from 20 to 70% by weight trehalose.

3. A solid, semi-solid or liquid comestible **characterized in that** dry matter of comestible is comprising at least 5% of a composition according to claim 1 or claim 2.

4. A comestible according to claim 3 **characterized in that** dry matter of comestible is comprising more than 10% of said composition.

5. A comestible according to claim 3 or 4 **characterized in that** said comestible is selected from the group consisting of tablets, bars, confectionery, beverages, beverage concentrates, gels, drink powders, diabetic food, baby food, infant food, dietetic food, slimming food, food for special dietary needs, and medical food.

6. A beverage according to claim 5 **characterized in that** said beverage is selected from the group consisting of hypotonic drinks, soft drinks, sports drinks, hypertonic drinks, energy drinks, and isotonic drinks.

7. A beverage according to claim 6 **characterized in that** it is further comprising carbohydrates, proteins, peptides, amino acids, antioxidants, fats, vitamins, trace elements, electrolytes, intense sweeteners, edible acids, flavors and/or mixtures thereof.

8. A beverage according to claim 7 **characterized in that** said carbohydrates are selected from the group consisting of monosaccharides, disaccharides, gelling starches, starch hydrolysates, dextrins, polyols and mixtures thereof.

9. A beverage according to claim 8 **characterized in that** dry substance of said carbohydrates in said beverage is comprising at least 50% of a composition containing
a) a mixture(A) of trehalose and a carbohydrate (H) selected from the group consisting of fructose, fructose syrups, sucrose, invert sugar, polyol, and mixtures thereof and wherein the ratio of trehalose to carbohydrate (H) is from 20:80 to 70:30,
b) a mixture (B) of trehalose and at least one intense sweetener, or
c) a mixture (C) of trehalose, at least one intense sweetener and a carbohydrate (H) selected from the group consisting of fructose, fructose syrups, sucrose, invert sugar, polyol, and mixtures thereof.

10. A beverage according to claim 8 **characterized in that** dry substance of said carbohydrates in said beverage is comprising at least 50% of a composition a mixture (A) wherein the ratio of trehalose and carbohydrate (H) is from 33:67 to 70:30, or a mixture (C) containing from 20 to 70% by weight trehalose.

11. Use of
a) a mixture(A) of trehalose and a carbohydrate (H) selected from the group consisting of fructose, fructose syrups, sucrose, invert sugar, polyol, and mixtures thereof,
b) a mixture (B) of trehalose and at least one intense sweetener, or
c) a mixture (C) of trehalose, at least one intense sweetener and a carbohydrate (H) selected from the group consisting of fructose, fructose syrups, sucrose, invert sugar, polyol, and mixtures thereof ,
for special dietary needs, slimming food, diabetics food, baby food, infant food and food for elderly, and medical food.

12. Use according to claim 11 **characterized in that** in said mixture (A) the ratio of trehalose to carbohydrate (H) is from 20:80 to 70:30, or in said mixture (C) trehalose is present from 20 to 70% by weight.

13. Use of
a) a mixture(A) of trehalose and a carbohydrate (H) selected from the group consisting of fructose, fructose syrups, sucrose, invert sugar, polyol, and mixtures thereof,
b) a mixture (B) of trehalose and at least one intense sweetener, or a mixture (C) of trehalose, at least one intense sweetener and a carbohydrate (H) selected from the group consisting of fructose, fructose syrups, sucrose, invert sugar, polyol, and mixtures thereof ,
to modify perception of satiety or hunger.
